# EUROPÄISCHE PATENTSCHRIFT

(11) **EP 4 173 455 B1**
(45) Veröffentlichungstag und Bekanntmachung des Hinweises auf die Patenterteilung: **16.10.2024**
(21) Anmeldenummer: 22401030.6
(22) Anmeldetag: 24.10.2022
(51) Int. Cl.: A01B 17/00, A01B 3/46, A01B 49/02, A01B 63/32

(54) **HUBMECHANIK ZUM EINSTELLEN EINER ARBEITSTIEFE EINER RÜCKVERFESTIGUNGSVORRICHTUNG EINES DREHPFLUGS**
LIFTING MECHANISM FOR ADJUSTING THE WORKING DEPTH OF A REVERSIBLE PLOUGH
MÉCANISME DE LEVAGE POUR RÉGLER LA PROFONDEUR DE TRAVAIL D'UN DISPOSITIF DE FIXATION ARRIÈRE D'UNE CHARRUE RÉVERSIBLE

(30) Priorität: 02.11.2021 DE 102021128432
(43) Veröffentlichungstag der Anmeldung: 03.05.2023
(73) Patentinhaber: Amazonen-Werke H. Dreyer SE & Co. KG, 49205 Hasbergen (DE)
(72) Erfinder: Bergmann, Jan, 32289 Rödinghausen (DE)

(56) Entgegenhaltungen:
- EP-B1- 2 793 542
- US-A- 5 740 868
- US-B2- 10 194 574

## Beschreibung

Die Erfindung betrifft eine Hubmechanik zum Einstellen einer Arbeitstiefe einer Rückverfestigungsvorrichtung eines Drehpflugs nach dem Oberbegriff des Patentanspruchs 1 und einen Drehpflug nach dem Oberbegriff des Patentanspruchs 10.

Beim Pflügen werden Hohlräume im Boden, die sog. Bodenkapillaren, zerstört, sodass es zum Eingriff in den Wasserhaushalt der obersten Bodenschicht kommt. Der Boden sollte jedoch zu einem gewissen Anteil aus Bodenkapillaren bestehen, um einen Wasseraustausch mit tieferen Schichten zu ermöglichen. Aus diesem Grund weisen Pflüge häufig eine Rückverfestigungsvorrichtung, beispielsweise einen Packer, auf, über welchen die nötige Rückverfestigung nach dem Umwurf des Bodens durch die Pflugkörper wieder hergestellt wird.

Bei keiner oder ungenügender Rückverfestigung steht den jungen Pflanzen nur wenig kapillares Wasser zur Keimung zur Verfügung. In trockenen Jahren kann eine ungenügende Rückverfestigung zu erheblichen Trockenschäden führen und den Feldaufgang beeinflussen.

Auf leichten bis mittleren Böden lässt sich durch den Einsatz einer Rückverfestigungsvorrichtung am Pflug ein saatfertiger Boden in nur einer Überfahrt erstellen.

Gattungsgemäße Pflüge, welche mit einer Rückverfestigungsvorrichtung ausgestattet sind, sind beispielsweise aus den Druckschriften EP 3 834 592 A1 und EP 2 793 542 A2 bekannt.

Drehpflüge können eine integrierte Rückverfestigungsvorrichtung aufweisen, deren Trägereinheit für die Arbeitsorgane parallel zum Pflugrahmen verläuft. Bei Drehpflügen muss gewährleistet sein, dass die Rückverfestigungsvorrichtung auf beiden Bearbeitungsseiten abgesenkt und ausgehoben werden kann. Außerdem darf der Wendevorgang nicht durch die Rückverfestigungsvorrichtung beeinträchtigt werden. Bei den bekannten Drehpflügen mit integrierter Rückverfestigungsvorrichtung kann jedoch kein ausreichender Bodendruck an den Arbeitsorganen der Rückverfestigungsvorrichtung erzielt werden.

Die der Erfindung zugrundeliegende Aufgabe besteht also darin, eine erhöhte Druckbeaufschlagung an der Rückverfestigungsvorrichtung zu ermöglichen, sodass die Rückverfestigung und Krümelung des Bodens verbessert wird.

Die Aufgabe wird gelöst durch eine Hubmechanik der eingangs genannten Art, wobei die erfindungsgemäße Hubmechanik eine Anlenkschwinge aufweist, welche gelenkig an dem Auslegerarm befestigt ist und über welche der Aushubzylinder mit dem Auslegerarm verbunden ist.

Der dem Auslegerarm zugeordnete Befestigungspunkt des Aushubzylinders weist aufgrund der Anlenkschwinge einen Hebelabstand zum Auslegerarm auf. Der Aushubzylinder kann aufgrund des Hebelabstands zwischen dem den Auslegerarm zugeordneten Befestigungspunkt des Aushubzylinders und dem Auslegerarm stets eine Kraft auf den Hubarm ausüben, auch wenn der Hubarm sich in Verlängerung des Auslegerarms erstreckt, also fluchtend zu diesem ausgerichtet ist, oder der Aushubzylinder waagerecht ausgerichtet ist. Das durch die Anlenkschwinge umgesetzte Hebelsystem funktioniert im Zusammenwirken mit den Pflugkörpern des Drehpflugs wie eine Art Schere. Die Arbeitsorgane der Rückverfestigungsvorrichtung arbeiten gegen die Pflugkörper, sodass über die Abstützung an den Pflugkörpern ein hoher Bodendruck für die Arbeitsorgane erreicht wird. Durch die gelenkige Anlenkschwinge werden also günstige Hebelverhältnisse erzielt, sodass ein hoher Bodendruck der Arbeitsorgane erreicht werden kann. Der Bodendruck ist dabei unabhängig von der Arbeitsrichtung des Drehpflugs und stimmt somit auf der linken und rechten Seite überein.

Die x- und y-Komponente der Kraft des Aushubzylinders können für die Druckbeaufschlagung der Rückverfestigungsvorrichtung genutzt werden. Die Hubmechanik erlaubt zusätzlich zur Einstellung der Arbeitstiefe der Rückverfestigungsvorrichtung vorzugsweise auch die Anpassung der Arbeitsrichtung des Drehpflugs. Die Rückverfestigungsvorrichtung wird bei der Bewegung des Drehpflugs zum Ändern der Arbeitsrichtung jederzeit geführt und muss nicht frei fallen. Der Aushubzylinder kann ein Pneumatik- oder Hydraulikzylinder sein. Der Aushubzylinder ist vorzugsweise dazu eingerichtet, mit einem Druckspeicher, insbesondere einem Stickstoffspeicher, verbunden zu werden. Über den Hydraulik- oder Pneumatikdruck kann der Bodendruck der Rückverfestigungsvorrichtung eingestellt werden.

In einer bevorzugten Ausführungsform der erfindungsgemäßen Hubmechanik ist der Aushubzylinder gelenkig an der Anlenkschwinge befestigt. Durch die gelenkige Befestigung des Aushubzylinders an der Anlenkschwinge können Aushubzylinder und Anlenkschwinge relativ zueinander verschwenkt werden. Der Aushubzylinder ist vorzugsweise derart gelenkig an der Anlenkschwinge befestigt, dass bei einer Längenänderung des Aushubzylinders die Ausrichtung des Aushubzylinders und/oder die Ausrichtung der Anlenkschwinge verändert wird.

Die erfindungsgemäße Hubmechanik wird ferner dadurch vorteilhaft weitergebildet, dass die Anlenkschwinge dazu eingerichtet ist, beim Ausfahren und/oder beim Einfahren des Aushubzylinders verschwenkt zu werden. Die Anlenkschwinge verändert bei einer Längenveränderung des Aushubzylinders also die Schwenkwinkelstellung. Vorzugsweise verändert auch der Aushubzylinder bei einer Längenveränderung des Aushubzylinders seine Schwenkwinkelstellung. Mit zunehmender Länge des Aushubzylinders verringert sich der Winkel zwischen Auslegerarm und Hubarm. Mit abnehmender Länge des Aushubzylinders vergrößert sich der Winkel zwischen Auslegerarm und Hubarm.

Mit zunehmender Länge des Aushubzylinders schwenkt die Anlenkschwinge vorzugsweise zunächst nach oben, sodass sich der Winkel zwischen der Anlenkschwinge und dem Auslegerarm verringert bis die Anlenkschwinge parallel zum Auslegerarm ausgerichtet ist. Bei einer weiteren Verlängerung des Aushubzylinders setzt die Anlenkschwinge zunächst ihre Schwenkbewegung nach oben fort, bis die Anlenkschwinge parallel zum Aushubzylinder ausgerichtet ist. Bei einer weiteren Verlängerung des Aushubzylinders schwenken die Anlenkschwinge und der Aushubzylinder dann gemeinsam in Parallelausrichtung zurück nach unten, bis Anlenkschwinge, Auslegerarm und Aushubzylinder parallel zueinander ausgerichtet sind. Mit abnehmender Länge des Aushubzylinders schwenken die Anlenkschwinge und der Aushubzylinder in Parallelausrichtung zunächst gemeinsam nach oben bevor die Anlenkschwinge dann die Schwenkrichtung ändert und nach unten verschwenkt wird, sodass sich der Winkel zwischen der Anlenkschwinge und dem Aushubzylinder vergrößert.

In einer anderen bevorzugten Ausführungsform der erfindungsgemäßen Hubmechanik ist der Hubarm durch Ausfahren des Aushubzylinders in eine Wendestellung verschwenkbar, in welcher der Auslegerarm und der Hubarm parallel oder fluchtend zueinander verlaufen. Nach dem Ausheben der Pflugkörper und vor dem Drehen des Pfluges ist der Hubarm in die Wendestellung zu verbringen. In der Wendestellung verläuft vorzugsweise auch der Aushubzylinder parallel und/oder fluchtend zum Auslegerarm und/oder zum Hubarm. In der Wendestellung befindet sich die Hubmechanik in einer Strecklage. Es ist kein separater Anschlag erforderlich, um den Hubarm über den Aushubzylinder in die Wendestellung zu bringen. Die Wendestellung kann also anschlagsfrei über den Aushubzylinder angefahren werden. Ist die Hubmechanik an einem Drehpflug mit zwei Pflugkörperreihen angeordnet, so befindet sich der Hubarm in der Wendestellung vorzugsweise mittig zwischen den gegenüberliegend am Pflugrahmen angeordneten Pflugkörperreihen. Die Hubmechanik inklusive der Rückverfestigungsvorrichtung können sich somit in der Wendestellung beim Transport senkrecht auf dem Pflugrahmen abstützen.

In einer weiteren bevorzugten Ausführungsform der erfindungsgemäßen Hubmechanik ist die Anlenkschwinge durch Ausfahren des Aushubzylinders in eine Schwenkwinkelstellung verschwenkbar, in welcher die Anlenkschwinge parallel oder fluchtend zum Auslegerarm und/oder zum Hubarm verläuft. Beim Verbringen des Hubarms von der Wendestellung in eine Arbeitsstellung und beim Verbringen des Hubarms von der Arbeitsstellung in die Wendestellung stellt sich vorzugsweise ein Zwischenzustand ein, in welchem die Anlenkschwinge parallel oder fluchtend zum Auslegerarm verläuft, und ein anderer Zwischenzustand, in welchem die Anlenkschwinge parallel oder fluchtend zum Aushubzylinder verläuft. In der Wendestellung befindet sich die Hubmechanik vorzugsweise in einer Strecklage, in welcher Anlenkschwinge, Aushubzylinder Auslegerarm und Hubarm parallel oder fluchtend zueinander verlaufen.

In einer weiteren vorteilhaften Ausführungsform der erfindungsgemäßen Hubmechanik ist der Hubarm durch Einfahren des Aushubzylinders in eine Arbeitsstellung verschwenkbar, in welcher der Hubarm nach unten geneigt oder parallel zu dem Auslegerarm verläuft. Nach unten bedeutet im Sinne der Erfindung in Richtung der Schwerkraft. Der Hubarm kann durch Einfahren des Aushubzylinders auch in eine Arbeitsstellung verschwenkbar sein, in welcher der Aushubzylinder parallel zum Auslegerarm verläuft und einen Höhenversatz zu dem Auslegerarm aufweist. Der Höhenversatz entsteht aufgrund der Verlagerung des auslegerseitigen Anlenkpunkts des Aushubzylinders durch die Anlenkschwinge. Es kann eine Arbeitstiefe, beispielsweise im Bereich von 35-40 cm existieren, bei welcher der Aushubzylinder zumindest nahezu parallel zum Auslegerarm verläuft. Durch den Einsatz der Anlenkschwinge ist der Bodendruck zumindest annähernd unabhängig von der Arbeitstiefe. Nach Abschluss der Pflugdrehung wird der Aushubzylinder, vorzugsweise die Kolbenringfläche des Aushubzylinders, insbesondere über einen Druckspeicher, beispielsweise einen Stickstoffspeicher, mit Druck beaufschlagt, wodurch der Hubarm abgesenkt wird.

Die erfindungsgemäße Hubmechanik wird ferner dadurch vorteilhaft weitergebildet, dass die Anlenkschwinge durch Einfahren des Aushubzylinders in eine Schwenkwinkelstellung verschwenkbar ist, in welcher die Anlenkschwinge winklig, vorzugsweise senkrecht, zum Auslegerarm und/oder zum Hubarm verläuft. Beispielsweise verläuft die Anlenkschwinge in einer ersten Endstellung, welche in einer ersten Arbeitsrichtung des Drehpflugs einstellbar ist und in einer zweiten Endstellung, welche in einer zweiten Arbeitsrichtung des Drehpflugs einstellbar ist, senkrecht zu dem Auslegerarm.

In einer anderen bevorzugten Ausführungsform der erfindungsgemäßen Hubmechanik ist der Hubarm dazu eingerichtet, bei einer ersten Ausrichtung der Hubmechanik durch Einfahren des Aushubzylinders schwerkraftbedingt in einer erste Schwenkrichtung bewegt und in eine erste Arbeitsstellung verschwenkt zu werden, in welcher der Hubarm nach unten geneigt zu dem Auslegerarm verläuft, und bei einer zweiten Ausrichtung der Hubmechanik durch Einfahren des Aushubzylinders schwerkraftbedingt in eine zweite Schwenkrichtung bewegt und in eine zweite Arbeitsstellung verschwenkt zu werden, in welcher der Hubarm nach unten geneigt zu dem Auslegerarm verläuft. In der ersten Ausrichtung der Hubmechanik zeigt die Oberseite der Hubmechanik nach oben. In der zweiten Ausrichtung der Hubmechanik zeigt die Oberseite der Hubmechanik nach unten. Die Hubmechanik kann dem Drehvorgang des Drehpflugs somit folgen, sodass die Rückverfestigungsvorrichtung für den Wendevorgang, bei dem der Pflug gedreht wird, nicht abgekoppelt werden muss. Dies wäre beispielsweise bei einem Packer mit Fangarm erforderlich.

In einer anderen bevorzugten Ausführungsform der erfindungsgemäßen Hubmechanik ist die Anlenkschwinge in einem Anlenkbereich an dem Auslegerarm befestigt, wobei der Auslegerarm im Anlenkbereich zwei voneinander beabstandete und vorzugsweise parallel zueinander verlaufende Auslegerschenkel aufweist und die Anlenkschwinge innenseitig der Auslegerschenkel angeordnet ist. Je nach Stellung der Anlenkschwinge befindet sich die Anlenkschwinge abschnittsweise oder vollständig in dem zwischen den Auslegerschenkeln liegenden Raum. Es ergibt sich also eine zumindest abschnittsweise innenliegende Anlenkschwinge, welche zumindest abschnittsweise durch die Auslegerschenkel geschützt wird.

Alternativ kann die Außenkontur des Auslegerarms im Anlenkbereich auch eine seitliche Vertiefung aufweisen, in welcher die Anlenkschwinge angeordnet ist. Die Anlenkschwinge kann in diesem Fall in die seitliche Vertiefung eingebettet sein, sodass die Anlenkschwinge sich je nach Stellung der Anlenkschwinge abschnittsweise oder vollständig in der seitlichen Vertiefung des Auslegerarms befindet.

Es ist darüber hinaus eine erfindungsgemäße Hubmechanik mit einer oder mehreren Anschlagsflächen vorteilhaft, welche dazu eingerichtet sind, die Schwenkbewegung der Anlenkschwinge zu begrenzen. Vorzugsweise ist die Anlenkschwinge zweischenklig ausgebildet und weist zwei Schwingenschenkel auf. Über eine oder mehrere Anschlagsflächen können eine oder mehrere Anschläge für jeden Schwingenschenkel vorhanden sein. Auf beiden Seiten des Auslegerarms können jeweils zwei Anschlagsflächen für die beiden Arbeitsrichtungen des Drehpflugs vorhanden sein. Die Anschlagsflächen können Endstellungen für die Anlenkschwinge vorgeben, wobei die Anlenkschwinge in den Endstellungen jeweils eine spezifische Schwenkwinkelstellung aufweist. Beispielsweise gibt eine erste Anschlagsfläche oder eine erste Gruppe von Anschlagsflächen eine erste Endstellung für die Anlenkschwinge vor, wobei die Anlenkschwinge in der ersten Endstellung eine erste Schwenkwinkelstellung aufweist. Beispielsweise gibt eine zweite Anschlagsfläche oder eine zweite Gruppe von Anschlagsflächen eine zweite Endstellung für die Anlenkschwinge vor, wobei die Anlenkschwinge in der zweiten Endstellung eine zweite Schwenkwinkelstellung aufweist. Zwischen der ersten Schwenkwinkelstellung und der zweiten Schwenkwinkelstellung liegen beispielsweise 180 Grad, sodass die Anlenkschwinge in einem Winkelbereich von 180 Grad verschwenkt werden kann. Die Anschlagsflächen können von einem Anschlagskörper getragen werden. Der Anschlagskörper kann beispielsweise zwischen den Auslegerschenkeln des Auslegerarms angeordnet sein.

In einer weiteren bevorzugten Ausführungsform der erfindungsgemäßen Hubmechanik weist der Hubarm zwei parallel zueinander verlaufende Hubstreben auf und/oder ist Bestandteil eines Parallelogrammgestänges. Die Hubstreben sind vorzugsweise über ein Verbindungselement miteinander verbunden, wobei der Aushubzylinder mit dem Verbindungselement verbunden ist. Die Hubstreben können jeweils mehrere Strebenglieder umfassen.

In einer anderen Ausführungsform der erfindungsgemäßen Hubmechanik ist der Hubarm mittels eines drei Gelenkachsen aufweisenden Gelenks mit der Trägereinheit verbunden. Vorzugsweise sind die Hubstreben oder das Parallelogrammgestänge des Hubarms mittels des Gelenks mit der Trägereinheit verbunden. Das Gelenk kann beispielsweise ein Kardangelenk sein. Durch das Gelenk können sich die Hubarme unabhängig voneinander in der Höhe bewegen, wenn die Trägereinheit bzw. die Arbeitsorgane der Bodenkontur folgen. Hierdurch wird ein Hangausgleich bzw. eine Überlastsicherung umgesetzt.

Die der Erfindung zugrundeliegende Aufgabe wird ferner durch einen Drehpflug der eingangs genannten Art gelöst, wobei die Hubmechanik des erfindungsgemäßen Drehpflugs nach einer der vorstehend beschriebenen Ausführungsformen ausgebildet ist. Hinsichtlich der Vorteile und Modifikationen des erfindungsgemäßen Drehpflugs wird zunächst auf die Vorteile und Modifikationen der erfindungsgemäßen Hubmechanik verwiesen.

Die Rückverfestigungsvorrichtung des Drehpflugs verläuft vorzugsweise im Wesentlichen parallel zum Pflugrahmen. Vorzugsweise bilden Pflugrahmen Auslegerarme mit Hubarmen und die Trägereinheit ein Parallelogramm. Die Rückverfestigungsvorrichtung ist vorzugsweise fest am Drehpflug verbaut. Die Rückverfestigungsvorrichtung kann ein tiefwirkender Packer mit als Speichenrädern, Gussringen oder Packerscheiben ausgebildeten Arbeitsorganen sein. Vorzugsweise sind die Arbeitsorgane aus tiefgezogenem Blech gefertigt. Die Rückverfestigungsvorrichtung kann ein oberflächig wirkender Walzenpacker sein, wobei die Arbeitsorgane in diesem Fall als Walzen ausgebildet sind.

In einer bevorzugten Ausführungsform des erfindungsgemäßen Drehpflugs ist zwischen der Trägereinheit und den Arbeitsorganen jeweils eine Überlastsicherung angeordnet. Die Überlastsicherungen können aus Gummi ausgebildet sein. Die Überlastsicherungen können jeweils als Gummiquetschlager ausgebildet sein.

In einer anderen bevorzugten Ausführungsform des erfindungsgemäßen Drehpflugs sind ein oder mehrere Arbeitsorgane drehbar und/oder weisen umlaufende Bodenkontaktflächen auf, welche seitlich in Richtung der Drehachse des Arbeitsorgans abfallen. Die seitlich abfallenden Bodenkontaktflächen bilden vorzugsweise ein Dachwinkelprofil. Zwischen den seitlich abfallenden Bodenkontaktflächen befindet sich vorzugsweise ein umlaufender Kranz mit einer Mehrzahl von Einbuchtungen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Drehpflugs in einer perspektivischen Darstellung;
- Fig. 2: die Hubmechaniken und die Rückverfestigungsvorrichtung des in der Fig. 1 abgebildeten Drehpflugs in einer perspektivischen Darstellung;
- Fig. 3: eine Hubmechanik des in der Fig. 1 abgebildeten Drehpflugs in einer perspektivischen Darstellung;
- Fig. 4: eine erfindungsgemäße Hubmechanik in einer Arbeitsstellung in einer schematischen Darstellung;
- Fig. 5: die in der Fig. 4 abgebildete Hubmechanik während der Betätigung in einem ersten Zwischenzustand;
- Fig. 6: die in der Fig. 4 abgebildete Hubmechanik während der Betätigung in einem zweiten Zwischenzustand;
- Fig. 7: die in der Fig. 4 abgebildete Hubmechanik während der Betätigung in einem dritten Zwischenzustand;
- Fig. 8: die in der Fig. 4 abgebildete Hubmechanik in einer Wendestellung; und
- Fig. 9: Arbeitsorgane einer Rückverfestigungsvorrichtung eines erfindungsgemäßen Drehpflugs in einer perspektivischen Darstellung.

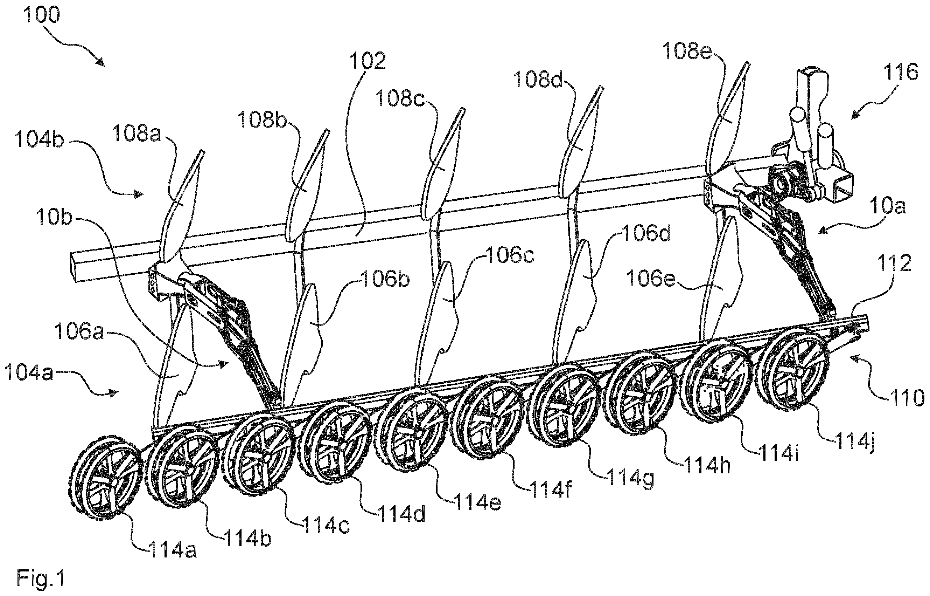

Die Fig. 1 zeigt einen Drehpflug 100 mit einem Pflugrahmen 102, wobei an dem Pflugrahmen 102 zwei Pflugkörperreihen 104a, 104b befestigt sind. Die Pflugkörperreihe 104a weist mehrere, nämlich fünf voneinander beabstandete Pflugkörper 106a-106e auf. Es versteht sich jedoch dass die Pflugkörperreihen 104a, 104b auch mehr oder weniger als fünf Pflugkörper 106a-106e aufweisen können. Die Pflugkörper 106a-106e der Pflugkörperreihe 104a werden zur Bodenbearbeitung in einer ersten Arbeitsrichtung eingesetzt. Die Pflugkörperreihe 104b weist mehrere, nämlich fünf voneinander beabstandet angeordnete Pflugkörper 108a-108e auf. Der Drehpflug 100 kann gewendet werden, sodass die Pflugkörper 108a-108e der Pflugkörperreihe 104b zum Bearbeiten des Bodens in einer zweiten Arbeitsrichtung eingesetzt werden können.

Der Drehpflug 100 weist ferner eine Rückverfestigungsvorrichtung 110 auf, welche im Wesentlichen parallel zum Pflugrahmen 102 verläuft. Zum Einstellen der Arbeitstiefe der Rückverfestigungsvorrichtung 110 ist die Rückverfestigungsvorrichtung 110 über Hubmechaniken 10a, 10b mit dem Pflugrahmen 102 verbunden.

Die Rückverfestigungsvorrichtung 110 umfasst eine Trägereinheit 112, an welcher mehrere Arbeitsorgane 114a-114j angeordnet sind. Die Rückverfestigungsvorrichtung 110 ist integraler Bestandteil des Drehpflugs 100.

In der dargestellten Ausführungsform ist die Rückverfestigungsvorrichtung 110 ein tiefwirkender Packer, wobei die Arbeitsorgane 114a-114j Ringpaare aus miteinander verschweißtem, tiefgezogenem Blech sind, welche dazu eingerichtet sind, eine Rückverfestigung des Bodens zu verursachen. Alternativ kann die Rückverfestigungsvorrichtung 110 auch ein oberflächig wirkender Walzenpacker sein, wobei die Arbeitsorgane 114a-114j in diesem Fall Walzen wären.

An dem Pflugrahmen 102 ist eine Kupplungsvorrichtung 116 angeordnet, über welche der Drehpflug 100 mit einem landwirtschaftlichen Fahrzeug, beispielsweise einem Traktor bzw. Schlepper gekoppelt werden kann.

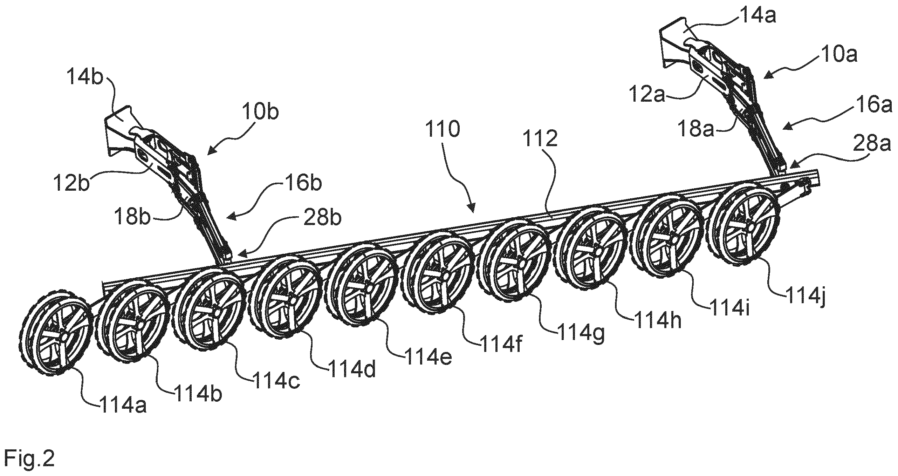

Die Fig. 2 zeigt, dass die Hubmechanik 10a einen Auslegerarm 12a aufweist, welcher über einen Befestigungskörper 14a mit dem Pflugrahmen 102 verbunden ist. Der Auslegerarm 12b der Hubmechanik 10b ist über den Befestigungskörper 14b mit dem Pflugrahmen 102 verbunden.

Die Hubmechanik 10a weist ferner einen Hubarm 16a auf, welcher mit der Trägereinheit 112 der Rückverfestigungsvorrichtung 110 verbunden ist. Die Hubmechanik 10b weist einen Hubarm 16b auf, welcher ebenfalls mit der Trägereinheit 112 der Rückverfestigungsvorrichtung 110 verbunden ist. Der Auslegerarm 12a ist gelenkig mit dem Hubarm 16a verbunden. Der Auslegerarm 12b ist gelenkig mit dem Hubarm 16b verbunden.

Die Hubmechaniken 10a, 10b weisen jeweils einen Aushubzylinder 18a, 18b auf, mittels welchen die Hubarme 16a, 16b zum Einstellen der Arbeitstiefe der Rückverfestigungsvorrichtung 110 relativ zu den Auslegerarmen 12a, 12b verschwenkbar sind. Üblicherweise werden die Hubmechaniken 12a, 12b zum Einstellen der Arbeitstiefe gleichzeitig und synchron betätigt.

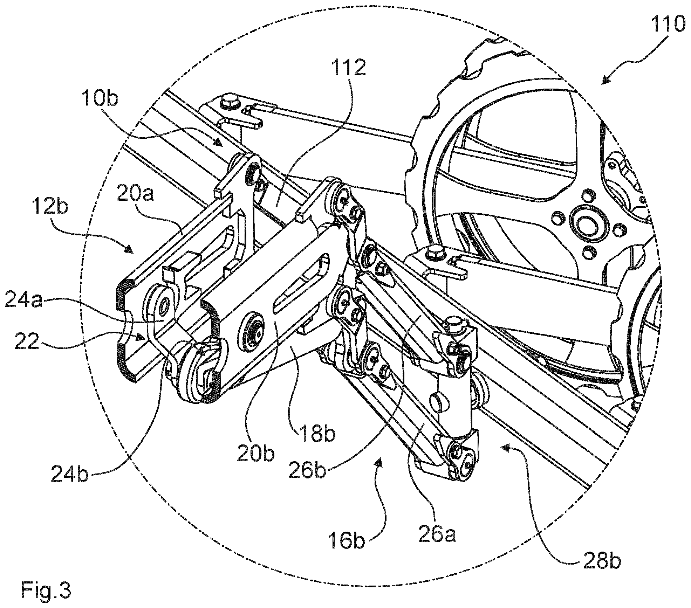

Die Fig. 3 zeigt die Hubmechanik 10b. Die Hubmechanik 10a kann in gleicher Weise ausgebildet sein.

In einem Anlenkbereich ist eine Anlenkschwinge 22 gelenkig an dem Auslegerarm 12b befestigt. Die Anlenkschwinge 22 ist ferner gelenkig an dem Aushubzylinder 18b befestigt. Der Auslegerarm 12b weist im Anlenkbereich zwei voneinander beabstandete und parallel zueinander verlaufende Auslegerschenkel 20a, 20b auf, wobei die Anlenkschwinge 22 innenseitig der Auslegerschenkel 22a, 22b angeordnet ist. Die Anlenkschwinge 22 ist zweischenklig ausgebildet und weist demnach zwei Schwingenschenkel 24a, 24b auf. Der Schwingenschenkel 24a ist gelenkig an dem Auslegerschenkel 20a angelenkt. Der Schwingenschenkel 24b ist gelenkig an dem Auslegerschenkel 20b angelenkt. Der dem Auslegerarm 12b zugeordnete Befestigungspunkt des Aushubzylinders 12b weist aufgrund der Anlenkschwinge 22 einen Hebelabstand zum Auslegerarm 12b auf. Der Aushubzylinder 18b kann aufgrund des Hebelabstands zwischen dem dem Auslegerarm 12 zugeordneten Befestigungspunkt des Aushubzylinders 18b und dem Auslegerarm 12b stets eine Kraft auf den Hubarm 16b ausüben, auch wenn der Hubarm 16b sich in Verlängerung des Auslegerarms 12b erstreckt, also fluchtend zu diesem ausgerichtet ist, oder der Aushubzylinder 18b waagerecht ausgerichtet ist.

Durch die gelenkige Anlenkschwinge 22 werden besonders günstige Hebelverhältnisse erzielt, wodurch ein hoher Bodendruck der Arbeitsorgane 14a-14j erreicht werden kann. Der Aushubzylinder 18b kann ein Pneumatik- oder Hydraulikzylinder sein. Der Aushubzylinder 18b ist mit einem Druckspeicher verbunden, wobei über eine Druckbeaufschlagung des Aushubzylinders 18b der Bodendruck an der Rückverfestigungsvorrichtung 110 eingestellt werden kann.

Je nach Stellung der Anlenkschwinge 22 befindet sich die Anlenkschwinge 22 abschnittsweise oder vollständig in dem zwischen den Auslegerschenkeln 20a, 20b liegenden Raum. Die zweischenklige Anlenkschwinge 22 wird somit zumindest abschnittsweise durch die Auslegerschenkel 20a, 20b geschützt.

Der Hubarm 16b weist zwei parallel zueinander verlaufende Hubstreben 26a, 26b auf, welche Bestandteile eines Parallelogrammgestänges sind. Die Hubstreben 26a, 26b sind über ein Verbindungselement 30 miteinander verbunden, wobei der Aushubzylinder 18b mit dem Verbindungselement 30 verbunden ist. Die Hubstreben 26a, 26b weisen jeweils mehrere Strebenglieder auf.

Die Hubstreben 26a, 26b des Hubarms 16b sind mittels eines drei Gelenkachsen aufweisenden Gelenks 28b mit der Trägereinheit 112 verbunden. Das Gelenk 28b ist ein Kardangelenk. Wie in der Fig. 2 dargestellt, ist die Hubmechanik 10a über das Gelenk 28a mit der Trägereinheit 112 verbunden, wobei die Hubmechanik 10b über das Gelenk 28b mit der Trägereinheit 112 verbunden ist. Über die beabstandete Anlenkung der Trägereinheit 12 mittels der Gelenke 28a, 28b wird ein Hangausgleich ermöglicht und gleichzeitig eine Überlastsicherung umgesetzt, da eine Verkippung und Verdrehung der Trägereinheit 112 ermöglicht wird.

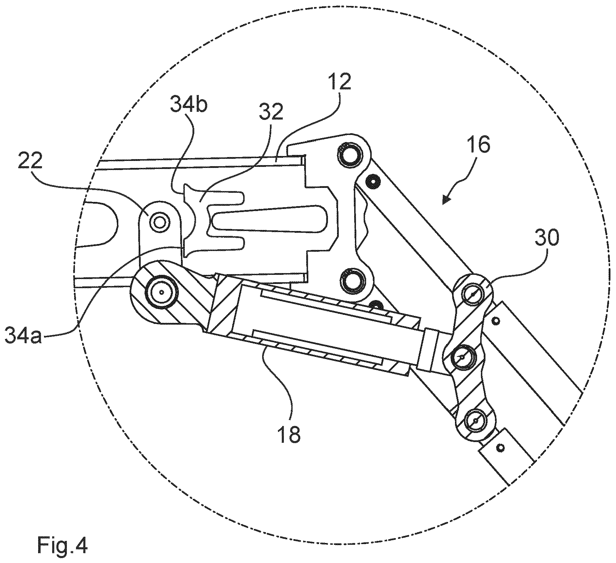

Die Fig. 4 bis 8 zeigen die Verstellung einer Hubmechanik 10 von einer Arbeitsstellung in eine Wendestellung. Die Hubmechanik 10 umfasst einen Auslegerarm 12 und einen gelenkig mit dem Auslegerarm 12 verbundenen Hubarm 16. Der Auslegerarm 12 und der Hubarm 16 sind ferner über den Aushubzylinder 18 und die Anlenkschwinge 22 miteinander verbunden. Die Anlenkschwinge 22 ist gelenkig mit dem Auslegerarm 12 und dem Aushubzylinder 18 verbunden. Der Aushubzylinder 18 ist gelenkig mit der Anlenkschwinge 22 und dem Hubarm 16 verbunden.

Bei dem in der Fig. 4 dargestellten Zustand befindet sich der Hubarm 16 in einer Arbeitsstellung, wobei sich der Aushubzylinder 18 in einem vollständig eingefahrenen Zustand befindet. Der Aushubzylinder 18 ist also maximal verkürzt. Die Anlenkschwinge 22 schlägt in diesem Zustand an einer Anschlagsfläche 34a eines Anschlagskörpers 32 an. Die Anlenkschwinge 22 ist rechtwinklig zu dem Auslegerarm 12 angeordnet, sodass die auslegerseitige Anlenkung des Aushubzylinders 18 maximal nach unten verlagert ist.

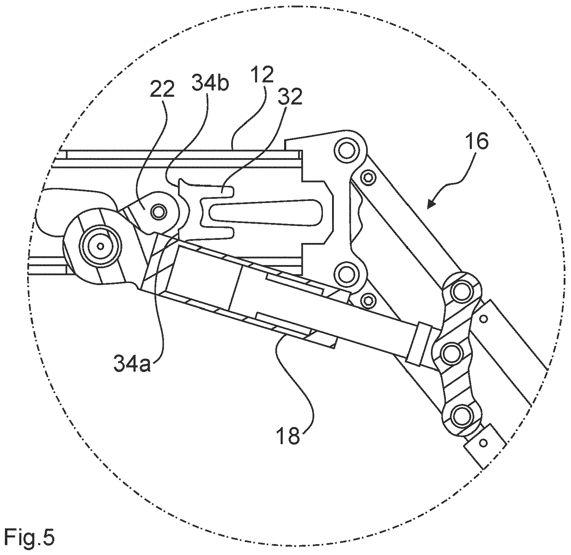

Wenn der Aushubzylinder 18 nun ausgefahren wird, stellt sich der in Fig. 5 dargestellte Zustand ein. Durch das Ausfahren des Aushubzylinders 18 wird die Anlenkschwinge 22 nach oben verschwenkt, sodass der Kontakt zur Anschlagsfläche 34a aufgelöst wird. Die Neigung des Hubarms 16 bleibt zunächst unverändert. Die Längenänderung des Aushubzylinders 18 wird durch eine Schwenkbewegung der Anlenkschwinge 22 ermöglicht.

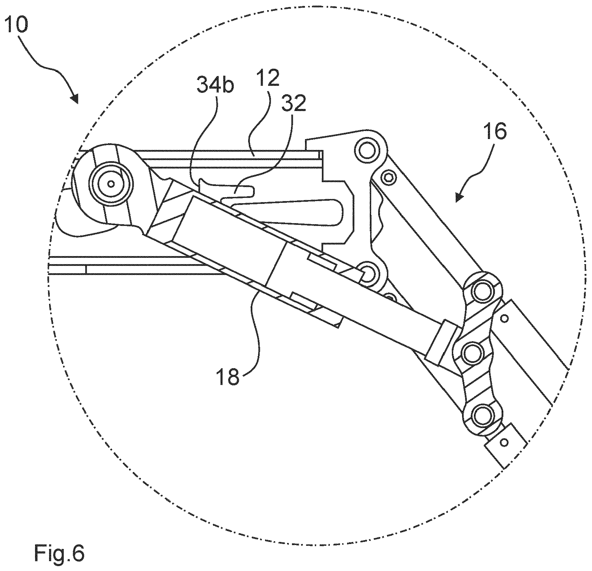

Bei einer weiteren Steigerung der Länge des Aushubzylinders 18 wird die Anlenkschwinge 22 weiter nach oben verschwenkt. Bei dem in der Fig. 6 dargestellten Zustand ist die Anlenkschwinge 22 fluchtend zu dem Aushubzylinder 18 ausgerichtet.

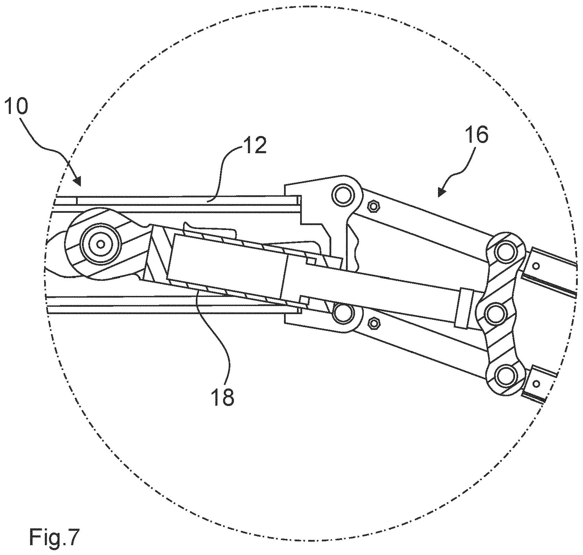

Wird der Aushubzylinder 18 nun weiter ausgefahren, verringert sich die Neigung des Hubarms 16, sodass die Rückverfestigungsvorrichtung 110, wie in der Fig. 7 dargestellt, ausgehoben wird. Beim Ausheben der Rückverfestigungsvorrichtung 110 schwenkt die Anlenkschwinge 22 in Parallelausrichtung zum Aushubzylinder 18 zurück nach unten.

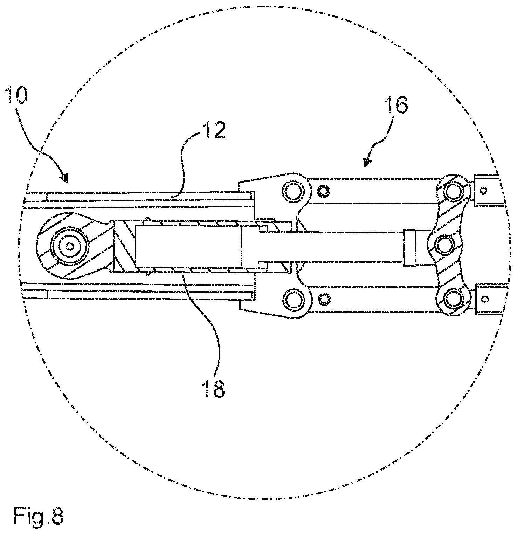

Durch ein weiteres Ausfahren des Aushubzylinders 18 kann die in der Fig. 8 dargestellte Wendestellung eingestellt werden. In der Wendestellung befindet sich die Hubmechanik 10 in einer Strecklage, in welcher Auslegerarm 12, Hubarm 16, Aushubzylinder 18 und Anlenkschwinge 22 parallel bzw. fluchtend zueinander ausgerichtet sind. In der Wendestellung ist die Rückverfestigungsvorrichtung 110 maximal ausgehoben.

In der Wendestellung kann der Drehpflug 100 samt Rückverfestigungsvorrichtung 110 nun gewendet werden, sodass die Bearbeitung in entgegengesetzter Richtung erfolgen kann. Nach dem Wenden des Drehpflugs 100 ist die Hubmechanik 10 durch Einfahren bzw. Verkürzen des Aushubzylinders 18 wieder in eine Arbeitsstellung zu verbringen. Dabei kann die Verkürzung des Aushubzylinders 18 derart erfolgen, dass die Anlenkschwinge 22 an der Anschlagsfläche 34b des Anschlagskörpers 32 anschlägt.

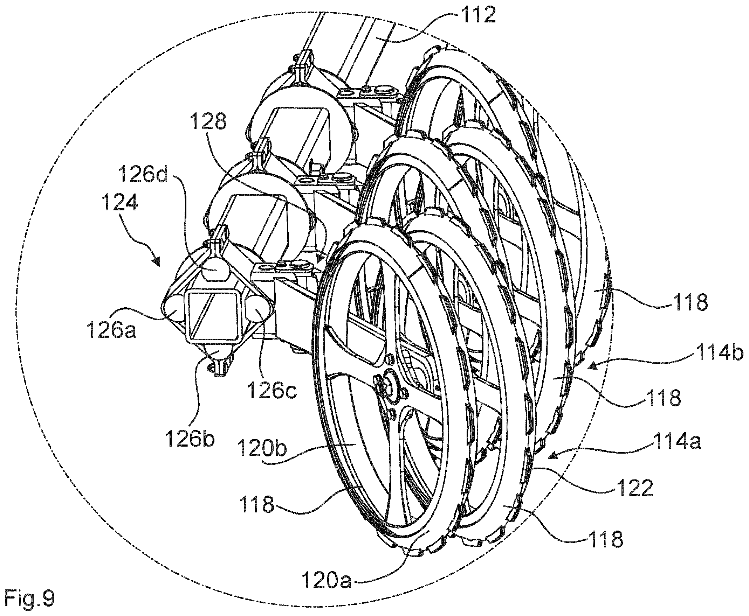

Die Fig. 9 zeigt, dass die Arbeitsorgane 114a-114j paarweise angeordnete Speichenräder 118 sind, welche jeweils umlaufende Bodenkontaktflächen 120a, 120b aufweisen, welche seitlich in Richtung der Drehachse des Arbeitsorgans abfallen. Die abfallenden Bodenkontaktflächen 120a, 120b bilden ein Dachwinkelprofil. Zwischen den seitlich abfallenden Bodenkontaktflächen 120a, 120b befindet sich ein umlaufender Kranz 122 mit einer Mehrzahl von Einbuchtungen.

Die Arbeitsorgane 114a-114j werden von Trägeranordnungen 128 getragen. Die Trägeranordnungen 128 sind jeweils über eine Überlastsicherung 124 an der Trägereinheit 112 befestigt. Die Trägereinheit 112 ist ein Trägerbalken. Die Trägeranordnungen 128 sind Trägerstreben. Zwischen der Trägereinheit 112 und den Trägeranordnungen 128 befinden sich Überlastsicherungen 124, wobei die Überlastsicherungen 124 als Gummiquetschlager ausgebildet sind. Hierzu weisen die Überlastsicherungen 124 jeweils vier Gummipuffer 126a-126d auf, welche eine Relativverdrehung von Trägereinheit 112 und Trägeranordnung 128 erlauben.

### Bezugszeichen

- 10, 10a, 10b: Hubmechaniken
- 12, 12a, 12b: Auslegerarme
- 14a, 14b: Befestigungskörper
- 16, 16a, 16b: Hubarme
- 18, 18a, 18b: Aushubzylinder
- 20a, 20b: Auslegerschenkel
- 22: Anlenkschwingen
- 24a, 24b: Schwingenschenkel
- 26a, 26b: Hubstreben
- 28a, 28b: Gelenke
- 30: Verbindungselement
- 32: Anschlagskörper
- 34a, 34b: Anschlagsflächen

- 100: Drehpflug
- 102: Pflugrahmen
- 104a, 104b: Pflugkörperreihen
- 106a-106e: Pflugkörper
- 108a-108e: Pflugkörper
- 110: Rückverfestigungsvorrichtung
- 112: Trägereinheit
- 114a-114j: Arbeitsorgane
- 116: Kupplungsvorrichtung
- 118: Speichenräder
- 120a, 120b: Bodenkontaktflächen
- 122: Kranz
- 124: Überlastsicherung
- 126a-126d: Gummipuffer
- 128: Trägeranordnung

## Patentansprüche

1. Hubmechanik (10, 10a, 10b) zum Einstellen einer Arbeitstiefe einer Rückverfestigungsvorrichtung (110) eines Drehpflugs (100), mit
- einem Auslegerarm (12, 12a, 12b), welcher dazu eingerichtet ist, mit einem Pflugrahmen (102) des Drehpflugs (100) verbunden zu werden;
- einem Hubarm (16, 16a, 16b), welcher dazu eingerichtet ist, mit einer Trägereinheit (112) für ein oder mehrere Arbeitsorgane (114a-114j) der Rückverfestigungsvorrichtung (110) verbunden zu werden; und
- einem Aushubzylinder (18, 18a, 18b), mittels welchem der Hubarm (16, 16a, 16b) zum Einstellen der Arbeitstiefe der Rückverfestigungsvorrichtung (110) relativ zum Auslegerarm (12, 12a, 12b) verschwenkbar ist;
**gekennzeichnet durch** eine Anlenkschwinge (22), welche gelenkig an dem Auslegerarm (12, 12a, 12b) befestigt ist und über welche der Aushubzylinder (18, 18a, 18b) mit dem Auslegerarm (12, 12a, 12b) verbunden ist.

2. Hubmechanik (10, 10a, 10b) nach Anspruch 1,
**dadurch gekennzeichnet, dass** der Aushubzylinder (18, 18a, 18b) gelenkig an der Anlenkschwinge (22) befestigt ist.

3. Hubmechanik (10, 10a, 10b) nach Anspruch 1 oder 2,
**dadurch gekennzeichnet, dass** die Anlenkschwinge (22) dazu eingerichtet ist, beim Ausfahren und/oder beim Einfahren des Aushubzylinders (18, 18a, 18b) verschwenkt zu werden.

4. Hubmechanik (10, 10a, 10b) nach einem der vorstehenden Ansprüche, **dadurch gekennzeichnet, dass** der Hubarm (16, 16a, 16b) durch Ausfahren des Aushubzylinders (18, 18a, 18b) in eine Wendestellung verschwenkbar ist, in welcher der Auslegerarm (12, 12a, 12b) und der Hubarm (16, 16a, 16b) parallel oder fluchtend zueinander verlaufen.

5. Hubmechanik (10, 10a, 10b) nach Anspruch 4,
**dadurch gekennzeichnet, dass** die Anlenkschwinge (22) durch Ausfahren des Aushubzylinders (18, 18a, 18b) in eine Schenkwinkelstellung verschwenkbar ist, in welcher die Anlenkschwinge (22) parallel oder fluchtend zum Auslegerarm (12, 12a, 12b) und/oder zum Hubarm (16, 16a, 16b) verläuft.

6. Hubmechanik (10, 10a, 10b) nach einem der vorstehenden Ansprüche, **dadurch gekennzeichnet, dass** die Anlenkschwinge (22) in einem Anlenkbereich an dem Auslegerarm (12, 12a, 12b) befestigt ist, wobei der Auslegerarm (12, 12a, 12b) im Anlenkbereich zwei voneinander beabstandete und vorzugsweise parallel zueinander verlaufende Auslegerschenkel (20a, 20b) aufweist und die Anlenkschwinge (22) innenseitig der Auslegerschenkel (20a, 20b) angeordnet ist.

7. Hubmechanik (10, 10a, 10b) nach einem der vorstehenden Ansprüche, **gekennzeichnet durch** eine oder mehrere Anschlagsflächen (34a, 34b), welche dazu eingerichtet sind, die Schwenkbewegung der Anlenkschwinge (22) zu begrenzen.

8. Hubmechanik (10, 10a, 10b) nach einem der vorstehenden Ansprüche, **dadurch gekennzeichnet, dass** der Hubarm (16, 16a, 16b) zwei parallel zueinander verlaufende Hubstreben (26a, 26b) aufweist und/oder Bestandteil eines Parallelogrammgestänges ist.

9. Hubmechanik (10, 10a, 10b) nach Anspruch 8,
**dadurch gekennzeichnet, dass** der Hubarm (16, 16a, 16b) mittels eines drei Gelenkachsen aufweisenden Gelenks (28a, 28b) mit der Trägereinheit (112) verbunden ist.

10. Drehpflug (100), mit
- einem Pflugrahmen (102);
- einer Rückverfestigungsvorrichtung (110), welche eine Trägereinheit (112) aufweist, an welcher ein oder mehrere Arbeitsorgane (114a-114j) angeordnet sind; und
- einer Hubmechanik (10, 10a, 10b) zum Eistellen einer Arbeitstiefe der Rückverfestigungsvorrichtung (110);
**dadurch gekennzeichnet, dass** die Hubmechanik (10, 10a, 10b) nach einem der vorstehenden Ansprüche ausgebildet ist.

11. Drehpflug (100) nach Anspruch 10,
**dadurch gekennzeichnet, dass** zwischen der Trägereinheit (112) und den Arbeitsorganen (114a-114j) jeweils eine Überlastsicherung (124) angeordnet ist.

12. Drehpflug (100) nach Anspruch 10 oder 11,
**dadurch gekennzeichnet, dass** ein oder mehrere Arbeitsorgane (114a-114j) drehbar sind und umlaufende Bodenkontaktflächen (120a, 120b) aufweisen, wobei die Bodenkontaktflächen (120a, 120b) seitlich in Richtung der Drehachse des Arbeitsorgans abfallen.

## Claims

1. A lifting mechanism (10, 10a, 10b) for adjusting a working depth of a reconsolidation device (110) of a reversible plow (100), having
- a boom arm (12, 12a, 12b) which is configured to be connected to a plow frame (102) of the reversible plow (100);
- a lifting arm (16, 16a, 16b) which is configured to be connected to a carrier unit (112) for one or more working units (114a-114j) of the reconsolidation device (110); and
- a lifting cylinder (18, 18a, 18b) by means of which the lifting arm (16, 16a, 16b) can be pivoted relative to the boom arm (12, 12a, 12b) for adjusting the working depth of the reconsolidation device (110);
**characterized by** a linkage (22) which is articulated to the boom arm (12, 12a, 12b) and via which the lifting cylinder (18, 18a, 18b) is connected to the boom arm (12, 12a, 12b).

2. The lifting mechanism (10, 10a, 10b) according to claim 1,
**characterized in that** the lifting cylinder (18, 18a, 18b) is articulated to the linkage (22).

3. The lifting mechanism (10, 10a, 10b) according to claim 1 or 2,
**characterized in that** the linkage (22) is configured to be pivoted when extending and/or retracting the lifting cylinder (18, 18a, 18b).

4. The lifting mechanism (10, 10a, 10b) according to any the preceding claims,
**characterized in that** the lifting arm (16, 16a, 16b) can be pivoted by extending the lifting cylinder (18, 18a, 18b) into a turning position in which the boom arm (12, 12a, 12b) and the lifting arm (16, 16a, 16b) run parallel or in alignment with one another.

5. The lifting mechanism (10, 10a, 10b) according to claim 4,
**characterized in that** the linkage (22) can be pivoted by extending the lifting cylinder (18, 18a, 18b) into a pivot angle position in which the linkage (22) runs parallel or in alignment with the boom arm (12, 12a, 12b) and/or the lifting arm (16, 16a, 16b).

6. The lifting mechanism (10, 10a, 10b) according to any the preceding claims,
**characterized in that** the linkage (22) is fastened to the boom arm (12, 12a, 12b) in an articulation region, wherein the boom arm (12, 12a, 12b) has two boom legs (20a, 20b) spaced apart from one another and preferably running parallel to one another in the articulation region, and the linkage (22) is arranged on the inside of the boom legs (20a, 20b).

7. The lifting mechanism (10, 10a, 10b) according to any the preceding claims,
**characterized by** one or more stop surfaces (34a, 34b) which are configured to limit the pivoting movement of the linkage (22).

8. The lifting mechanism (10, 10a, 10b) according to any the preceding claims,
**characterized in that** the lifting arm (16, 16a, 16b) has two lifting struts (26a, 26b) running parallel to one another and/or is part of a parallelogram linkage.

9. The lifting mechanism (10, 10a, 10b) according to claim 8,
**characterized in that** the lifting arm (16, 16a, 16b) is connected to the carrier unit (112) by means of a joint (28a, 28b) having three joint axes.

10. A reversible plow (100), having
- a plow frame (102);
- a reconsolidation device (110) which has a carrier unit (112) on which one or more working units (114a-114j) are arranged; and
- a lifting mechanism (10, 10a, 10b) for adjusting a working depth of the reconsolidation device (110);
**characterized in that** the lifting mechanism (10, 10a, 10b) is designed according to any of the preceding claims.

11. The reversible plow (100) according to claim 10,
**characterized in that** an overload protection device (124) is arranged between the carrier unit (112) and the working units (114a-114j).

12. The reversible plow (100) according to claim 10 or 11,
**characterized in that** one or more working units (114a-114j) are rotatable and have circumferential ground contact surfaces (120a, 120b), wherein the ground contact surfaces (120a, 120b) slope laterally in the direction of the axis of rotation of the working unit.

## Revendications

1. Mécanisme de levage (10, 10a, 10b) permettant de régler une profondeur de travail d'un dispositif de rappuyage (110) d'une charrue réversible (100), comportant
- un bras de flèche (12, 12a, 12b) qui est conçu pour être relié à un châssis de charrue (102) de la charrue réversible (100) ;
- un bras de levage (16, 16a, 16b) qui est conçu pour être relié à une unité de support (112) pour un ou plusieurs organes de travail (114a-114j) du dispositif de rappuyage (110) ; et
- un vérin de relevage (18, 18a, 18b), au moyen duquel le bras de levage (16, 16a, 16b) peut pivoter par rapport au bras de flèche (12, 12a, 12b) pour le réglage de la profondeur de travail du dispositif de rappuyage (110) ;
**caractérisé par** une bielle d'articulation (22) qui est fixée de manière articulée au bras de flèche (12, 12a, 12b) et par l'intermédiaire de laquelle le vérin de relevage (18, 18a, 18b) est relié au bras de flèche (12, 12a, 12b).

2. Mécanisme de levage (10, 10a, 10b) selon la revendication 1,
**caractérisé en ce que** le vérin de relevage (18, 18a, 18b) est fixé de manière articulée sur la bielle d'articulation (22).

3. Mécanisme de levage (10, 10a, 10b) selon la revendication 1 ou 2,
**caractérisé en ce que** la bielle d'articulation (22) est conçue pour pivoter lors du déploiement et/ou de la rétraction du vérin de relevage (18, 18a, 18b).

4. Mécanisme de levage (10, 10a, 10b) selon l'une des revendications précédentes,
**caractérisé en ce que** le bras de levage (16, 16a, 16b) peut pivoter, par le déploiement du vérin de relevage (18, 18a, 18b), dans une position de retournement dans laquelle le bras de flèche (12, 12a, 12b) et le bras de levage (16, 16a, 16b) s'étendent parallèlement ou à fleur l'un par rapport à l'autre.

5. Mécanisme de levage (10, 10a, 10b) selon la revendication 4,
**caractérisé en ce que** la bielle d'articulation (22) peut pivoter, par le déploiement du vérin de relevage (18, 18a, 18b), dans une position angulaire de branche dans laquelle la bielle d'articulation (22) s'étend parallèlement ou à fleur par rapport au bras de flèche (12, 12a, 12b) et/ou au bras de levage (16, 16a, 16b).

6. Mécanisme de levage (10, 10a, 10b) selon l'une des revendications précédentes,
**caractérisé en ce que** la bielle d'articulation (22) est fixée dans une zone d'articulation sur le bras de flèche (12, 12a, 12b), dans lequel le bras de flèche (12, 12a, 12b) présente, dans la zone d'articulation, deux branches de flèche (20a, 20b) espacées l'une de l'autre et s'étendant de préférence parallèlement l'une à l'autre et la bielle d'articulation (22) est disposée côté intérieur des branches de flèche (20a, 20b).

7. Mécanisme de levage (10, 10a, 10b) selon l'une des revendications précédentes,
**caractérisé par** une ou plusieurs surfaces de butée (34a, 34b) qui sont conçues pour limiter le mouvement de pivotement de la bielle d'articulation (22).

8. Mécanisme de levage (10, 10a, 10b) selon l'une des revendications précédentes,
**caractérisé en ce que** le bras de levage (16, 16a, 16b) présente deux entretoises de levage (26a, 26b) s'étendant parallèlement l'une à l'autre et/ou fait partie d'une tringlerie en parallélogramme.

9. Mécanisme de levage (10, 10a, 10b) selon la revendication 8,
**caractérisé en ce que** le bras de levage (16, 16a, 16b) est relié à l'unité de support (112) au moyen d'une articulation (28a, 28b) présentant trois axes d'articulation.

10. Charrue réversible (100), comportant
- un châssis de charrue (102) ;
- un dispositif de rappuyage (110) qui présente une unité de support (112) sur laquelle sont disposés un ou plusieurs organes de travail (114a-114j) ; et
- un mécanisme de levage (10, 10a, 10b) permettant de régler une profondeur de travail du dispositif de rappuyage (110) ;
**caractérisée en ce que** le mécanisme de levage (10, 10a, 10b) est réalisé selon l'une des revendications précédentes.

11. Charrue réversible (100) selon la revendication 10,
**caractérisée en ce que** respectivement un moyen de protection contre les surcharges (124) est disposé entre l'unité de support (112) et les organes de travail (114a-114j).

12. Charrue réversible (100) selon la revendication 10 ou 11,
**caractérisée en ce qu'**un ou plusieurs organes de travail (114a-114j) peuvent tourner et présentent des surfaces de contact avec le sol (120a, 120b) périphériques, dans laquelle les surfaces de contact avec le sol (120a, 120b) sont inclinées latéralement en direction de l'axe de rotation de l'organe de travail.
